# EUROPEAN PATENT APPLICATION

(11) **EP 4 843 893 A1**
(43) Date of publication of application: **25.11.2026**
(21) Application number: 25382506.1
(22) Date of filing: 20.05.2025
(51) Int. Cl.: B64D 39/00, B64D 39/04, B64C 9/00

(54) **STABILIZATION DEVICE FOR AN IN-FLIGHT REFUELLING SYSTEM**

(71) Applicant: Airbus Defence and Space, S.A.U., 28022 Madrid (ES)
(72) Inventor: VALDEOLMOS TRABA, Javier, E-28906 Getafe, Madrid (ES)
(74) Representative: ABG Intellectual Property Law, S.L.

(57) **Abstract**

The present invention belongs to the field of air to air refuelling for aircraft, in particular to the field of systems for monitoring and adapting the movement at the end of an air to air refuelling hose (3) of a tanker aircraft. More particular, the invention provides an improved stabilization device (6) for an in-flight refuelling system (1) which intends to counteract the undesirable movements at the end of the hose (3) through generating aerodynamic loads in the end of the hose during a refuelling operation.

## Description

### TECHNICAL FIELD OF THE INVENTION

The present invention belongs to the field of air to air refuelling for aircraft, in particular to the field of systems for monitoring and adapting the movement at the end of an air to air refuelling hose of a tanker aircraft. More particular, the invention provides an improved stabilization device for an in-flight refuelling system which intends to counteract the undesirable movements at the end of the hose through generating aerodynamic loads in the end of the hose during a refuelling operation.

### BACKGROUND OF THE INVENTION

In-flight refuelling operations using a hose and drogue system deploy a hose with a coupling and a drogue at its end. The drogue generates aerodynamic drag to maintain tension in the hose during a refuelling operation.

In current in-flight refuelling methods, first of all, the drogue is stored in the tanker aircraft and the system is turned off while the tanker aircraft pilot stabilizes the aircraft at air to air refuelling altitude. Then, the drogue is still stored in the tanker aircraft and the system is turned on while a second aircraft called receiver aircraft waits for further instructions from the tanker aircraft for initiating the refuelling operation. Next, the drogue is extended from the tanker aircraft and the hose is deployed till reaching a stand-by position while the receiver aircraft is still waiting. Then, the receiver performs an approach to face the drogue with a receiver probe. While the receiver aircraft tries to make contact with the drogue it creates a phenomenon called *Bow Effect* which moves the drogue from its balance position. This specific step of approaching completely relies on receiver aircraft pilot skills and anticipation to the drogue movements. It is well known that this step can be the consequence of a lot of tanker/receiver/drogue damages and results as well as an unsuccessful contact operation. Once the receiver aircraft succeeds to make contact with the drogue, it pushes the drogue with the receiver probe to complete contact between the system of the tanker aircraft and the receiver aircraft. While the receiver aircraft pushes the drogue, a phenomenon called *Whipping* can appear on the contact area which is caused by the impact of the receiver probe transmitted to the hose in wave form. Such as the previous step mentioned, the pushing operation is also considered as a dangerous manoeuvre of the current air to air refuelling operation. Then, the fuel starts to be dispensed from the tanker aircraft but the drogue is still submitted to radial loads transmitted by the receiver aircraft which means that risk of damage is not eliminated until full disconnection of the receiver aircraft from the drogue. Finally, the receiver aircraft goes backward and starts to disconnect the receiver probe from the drogue. If needed, the operation can be repeated more than once with the same tanker aircraft.

Current drogues have some passive stability due to their canopy design, but they are not actively stabilized. This makes its behaviour highly dependent on flow around it, such as wind gusts or the receiver aircraft *Bow Effect,* which complicates manoeuvres that receiver aircraft need to perform to make contact. That is, current drogues do not have any active system to change the aerodynamic drag at the hose-end of the hose and drogue system. Most drogues have a fixed geometry that produces a quadratic drag curve with the flight speed.

On the other hand, there are also known variable geometry drogues with passive systems, mainly springs, which produce a flatter drag curve at the hose-end. Actively changing the aerodynamic drag could allow to better adapt the curve to the hose and drogue system needs or change the drag punctually at certain moment of the in-flight refuelling operation.

The current state-of-the-art of in-flight refuelling active stabilization drogues propose adapting the shape of the drogue's canopy. This shape depends on the upstream flow, so its control will depend largely on that flow, which makes a difficult design and control. On the other hand, in a contact the probe of the receiver aircraft usually impacts the canopy and deforms it, losing its stabilization capacity at the most critical moment.

Other proposals are based on the use of spoilers to stabilize the drogue at the hose-end but that produces detachment of the boundary layer. This detachment could affect the drogue's canopy and produce un-prescribed displacement of the drogue.

Further proposals are based on different fin designs around the coupling or the drogue. All of these fins suffer from the possibility of colliding with the tunnel once the drogue is recovered, possibly damaging the fins. In addition, during a refuelling operation in the event of failure of a fin, this produce unwanted bending or torsion moments.

Current in-flight refuelling operations are performed without any active stabilization device for drogues, so their behaviour is highly dependent on the airstream, this produces movements due to wind gusts or the *Bow Effect* produced by the nose or the probe of the receiver aircraft.

The known solutions provides the following drawbacks: degradation on drogue's performances, do not protect against impacts with receiver and in-flight refuelling system rear fairing tunnel during rewind; need to fold and unfold the devices for storage in the rear fairing tunnel, not been able to change aerodynamic drag without creating lateral forces or moments, and the provision of bending or torsion moments in normal operation or with failure.

Therefore, the present invention provides an improvement in the active stabilization and control of the hose-end in order to generate, control forces and variable drag without generating control forces, at the hose-end of an in-flight refuelling hose and drogue system to stabilize the drogue. The control forces generation provides stabilization and reduces the effects of wind gusts, *Bow Effects* of the receiver aircraft or other perturbations. In addition, varying the aerodynamic drag allows to adjust the drag curve or to generate drag peaks at specific points.

### SUMMARY OF THE INVENTION

The present invention provides a solution for the aforementioned problems, by a stabilization device according to claim 1, an in-flight refuelling system according to claim 11, a tanker aircraft according to claim 13 and a method for stabilization a hose-end of an in-flight refuelling system according to claim 14. In dependent claims, preferred embodiments of the invention are defined.

In a first inventive aspect, the present invention provides stabilization device for an in-flight refuelling system, the stabilization device being arranged along a longitudinal axis X-X' and comprising:
- a plurality of aerofoils arranged radially around the longitudinal axis X-X', each aerofoil comprises a rotation axis around which the aerofoil is adapted for rotating;
- a support structure adapted for supporting the plurality of aerofoils; and
- control means connected with the plurality of aerofoils and configured to independently control the rotation of each aerofoil in a refuelling operation when the stabilization device is arranged on the in-flight refuelling system.

The present invention provides as first inventive aspect a stabilization device intended to be installed in an in-flight refuelling system for a tanker aircraft for generating control forces and aerodynamic drag to counteract the undesirable movements at the end of the hose in a refuelling operation between the tanker aircraft and a receiver aircraft. These undesirable movements at the hose-end are external forces or perturbations that could move the coupling with the drogue from its equilibrium position in the refuelling operation, and particularly in the contact operation. The "contact operation" will be understood as the operation in which the coupling of the present system comes into contact with a receiver probe of a receiver aircraft. In the context of the invention, control forces means aerodynamic radial loads.

That is, the present invention provides an improved stabilization device with the capability of being controlled in order to provide drogue stabilization as a receiver aircraft approaches to contact with the drogue of the in-flight refuelling system of a tanker aircraft.

The stabilization device is arranged along a longitudinal axis X-X' and comprises a plurality of aerofoils or fins, a support structure supporting the aerofoils and control means for controlling the operation of the aerofoils.

The aerofoils are arranged radially around the longitudinal axis X-X', which means that they are distributed concentrically to the longitudinal axis X-X'. Each aerofoil comprises a rotation axis around which the aerofoil is able to rotate. The stabilization device uses aerofoils to produce the desired forces, adjusting the required force by rotating them.

Compared to the prior art where spoilers were used, the use of aerofoils avoids detachment of the boundary layer that could affect the canopy of the drogue.

The orientations of the aerofoils allows the final diameter of the stabilization device to be reduced compared to the prior art, and this avoids the need to fold and unfold aerofoils for storage in the rear fairing tunnel when the stabilization device is installed in a refuelling system. That is, the specific configuration of the stabilization device with the aerofoils always deployed avoids the risk of not being able to store this stabilization device due to a mechanical jamming.

In addition, the reduced diameter and the orientation of the aerofoils avoid degradation on drogue's performances because the aerodynamic influence of the aerofoils does not reach the canopy area.

Moreover, the orientation of the aerofoils generates radial aerodynamic forces to the hose at all times, both in normal operation or in case of runaway or mechanical jamming. Therefore, no bending or torsion moments are generated.

By last, the orientation of the aerofoils also allows the aerodynamic drag to be changed without generating other forces or moments. This is achieved by rotating some or all the aerofoils at the same time in a symmetrical manner.

In the context of the invention, the orientation of the aerofoils refers to the rotation of the aerofoils around their corresponding rotation axis.

The stabilization device also comprises a support structure that supports the plurality of aerofoils so that the aerofoils can rotate around their respective rotation axis. This support structure act as a protective casing that protects against impacts with in-flight refuelling system rear fairing tunnel during rewind in a refuelling operation. The probability of damage of the aerofoils during rewinding or in-flight operation is significantly reduced by the specific design of the aerofoils.

The control means are connected to each aerofoil to independently control the rotation of each aerofoil in a refuelling operation when the stabilization device is arranged on the in-flight refuelling system.

Advantageously, the present stabilization device provides stabilization, variable aerodynamic drag, guiding and active control capabilities, which makes the refuelling operations easier or even completely automatic when the stabilization device is installed on a refuelling system.

In an embodiment, the rotation axis of each aerofoil is perpendicular to a radial direction to longitudinal axis X-X'. In the context of the present description, the term "radial direction" is understood as along a direction that points along a radius from the longitudinal axis X-X'. In this embodiment, the orientation of the aerofoils generates lift in a radial direction to the hose when the stabilization device is installed in a refuelling system in order to provide the lift and lateral force needed to displace the drogue.

In an embodiment, the stabilization device comprises a set of eight aerofoils. The number of aerofoils depends on the space available and the amount of force needed at the hose-end.

In an embodiment, each aerofoil is supported at its respective ends by the support structure. The support structure supports each aerofoil at the ends of each aerofoil and this allows the aerofoils to rotate around their respective rotation axis in an easy way.

In an embodiment, the support structure comprises a plurality of supports arranged in a radial direction to the longitudinal axis X-X'. The supports projects towards the aerofoils in radial directions to the longitudinal axis X-X', this means that each supports follows a radial direction to the longitudinal axis X-X'.

In an embodiment, the supports have a bullet or cone shape at the front to guide the stabilization device inside the rear fairing tunnel in a refuelling system. The expression "at the front" refers to the position of the support that is facing towards the hose-end opposite to the drogue.

The supports prevent impacts on the aerofoils when entering the rear fairing tunnel and thus risking damaging either the aerofoils or the actuators of the control means to which they are connected. The supports also protects the entire stabilization device from possible impacts from the receiver aircraft during an in-flight refuelling operation.

In an embodiment, the support structure comprises a casing configured to protect at least part of the in-flight refuelling system in a refuelling operation when the stabilization device is arranged on the in-flight refuelling system. In an embodiment, the casing in an enclosure arranged around the longitudinal axis X-X'. In an embodiment, the supports projects from the casing to the aerofoils, in particular, to the ends of the aerofoils.

In an embodiment, the aerofoils are arranged consecutively one after the other around the longitudinal axis X-X' so that there is a common support for every two consecutive aerofoils. In this embodiment, the aerofoils are arranged as a continuous shell or ring around the longitudinal axis X-X' and there is a support for each two consecutive aerofoils.

In another embodiment, the aerofoils are arranged spaced apart between each other around the longitudinal axis X-X' so that each aerofoils is supported by two supports of the support structure. The aerofoils are arranged as a discontinuous shell or ring around the longitudinal axis X-X' and there is two supports for each aerofoil.

The aerofoils can be actuated using different configurations. In an embodiment, the control means comprise an actuator for each aerofoil, and wherein each actuator is configured to operate the rotation of the respective aerofoil as needed. That is, there is an actuator for each aerofoil wherein the actuator operates the rotation of the aerofoils around its respective rotation axis. This embodiment allows the necessary lift, lateral force or added aerodynamic drag to be generated using various techniques. For example, the stabilization device could use half the aerofoils for generating radial force and the other half for added drag, or use all aerofoils at once to generate them.

In an embodiment, the operation of the actuators is transmitted through the support structure, and preferably through the supports of the support structure.

In another embodiment, the control means comprise:
- a swashplate mechanically connected to the plurality of aerofoils, and
- at least one linear actuator configured to operate the rotation of at least one aerofoils through the swashplate actuation.

In this embodiment, all the aerofoils are commanded by a swashplate. Tilting this swashplate generates asymmetric rotations of the aerofoils, generating radial forces. Linearly moving the swashplate generates symmetrical rotations of the aerofoils, increasing the aerodynamic drag of the stabilization device without generating radial forces.

In an embodiment, each aerofoil is mechanically connected with the swashplate through the supports of the support structure.

In an embodiment, the control means comprise a plurality of linear actuators configured to actuate the swashplate for independently operating the rotation of the aerofoils.

In an embodiment, the control means comprise at least one inertial measurement unit "IMU" configured to measure an acceleration and/or angular rate of the stabilization device.

The IMU is configured to measure the movement of the stabilization device, specifically the acceleration at the stabilization device and/or the angular rate of the stabilization device. That is, when the stabilization device is installed on an in-flight refuelling system, the IMU measures the acceleration and/or the angular rate of the stabilization device at the hose-end in a refuelling operation. Thus, this IMU advantageously allows to monitor in real time the movement of the stabilization device in an air to air refuelling operation. In other words, the control means uses information from the IMU to control and/or stabilize the stabilization device.

In an embodiment, the IMU comprises at least one accelerometer for measuring the acceleration and a gyroscope for measuring the angular rate.

In an embodiment, the control means further comprise a control unit configured for controlling the operation of the actuators or the at least one linear actuator according to data measurement from the IMU.

In an embodiment, the control means comprises a processing unit for determining in an operative mode (when the stabilization device is installed on a refuelling system) the aerodynamic control forces and drag that are necessary to counteract the undesirable movements at the hose-end in order to facilitate the contact operation between the tanker aircraft and the receiver aircraft.

In a second inventive aspect, the present invention provides an in-flight refuelling system for a tanker aircraft, the system comprising:
- a hose suitable for driving fuel inside,
- a coupling arranged at a hose-end of the hose along a longitudinal axis X-X' and comprising a drogue, the coupling being configured to be coupled to a probe of a receiver aircraft in a refuelling operation, and
- a stabilization device according to any one of the embodiments of the first inventive aspect, the stabilization device being configured to actively stabilize the hose-end in the refuelling operation;
wherein the stabilization device is configured so that controlling the rotation of the at least one of the plurality of aerofoils by the control means stabilize the hose-end in a refuelling operation.

The present system provides an active control of the hose facilitating the contact in the refuelling operation by means of introducing aerodynamic radial loads (as control forces) and varying the aerodynamic drag at the hose-end in an improved new way in order to stabilize the hose-end. The term "stabilize" shall be understood as stabilizing the movement of the hose-end so that it can be coupled to a receiving aircraft in a refuelling operation.

The in-flight refuelling system is mainly formed by means of a hose and a drogue arranged at one end of the hose. The hose comprises two ends, a first end intended to be coupled to a probe of the receiver aircraft by means of the coupling and a second end intended to be fixed to the tanker aircraft. Through this hose a fuel supply is provided from the tanker aircraft to the receiver aircraft, that is, from one hose-end to the other hose-end. Throughout this document when reference is made to "hose-end", this will be understood as the free end of the hose through which the coupling with the receiver aircraft is performed. In addition, in case the other end of the hose is referred to, it will be referred to as the hose-end that is fixed to the tanker aircraft. The drogue is comprised in a coupling that is located at the hose-end and is responsible for generating aerodynamic drag and passively stabilizing the hose.

The present system further comprises a stabilization device arranged at the hose-end and in charge of stabilization of the hose-end by providing control forces and varying aerodynamic drag at the hose-end in the refuelling operation through the rotation of at least one aerofoil of the plurality of aerofoils.

Therefore, the stabilization device in order to stabilize the hose-end provides control forces and varies the aerodynamic drag at the hose-end by means of adjusting the rotation of each aerofoil appropriately.

The lift and lateral force requires to stabilize or move the drogue in a refuelling system in the desired direction can be generated by rotating one or more aerofoils at the same time. If it is necessary to change the aerodynamic drag of the drogue, at a certain moment of the in-flight refuelling operation or depending on the flight speed, it can be generated by symmetrically rotating the aerofoils in opposite pairs, so that the radial loads generated are cancelled and only obtaining aerodynamic drag.

In an embodiment, the control means of the stabilization device determines the aerodynamic control forces and drag needed at the hose-end based on the IMU measurements. In addition, the control means further considers conditions of the refuelling operation and/or the relative position between the stabilization device or the hose-end and the probe of receiver aircraft. That is, there are sensing means located at the hose-end or the stabilization device which are able to detect the relative position between their location and the probe of the receiver aircraft, having complete information about the spatial location of the tanker, the hose-end and the probe of the receiver aircraft.

In an embodiment, the stabilization device is located at the coupling.

In another embodiment, the stabilization device is located at the drogue.

I another embodiment, the stabilization device is located at an interface between the hose and the coupling.

In an embodiment, the present refuelling system can be autonomous in such a way that the control unit of the stabilization device is in charge of controlling the operation of the stabilization device even when the refuelling system is in an operating mode installed on the tanker aircraft.

In another embodiment, when the system is in an operative mode installed in the tanker aircraft, the operation of the refuelling system is controlled by an aircraft control equipment of the tanker aircraft. In this embodiment, the communication between the tanker aircraft and the components of the refuelling system, such as the stabilization device, is wireless.

The aircraft control equipment is formed at least by a controller and an human machine interface "HMI" both connected between them and also suitable to be connected to the in-flight refuelling system. The HMI interacts with the refuelling system to monitor and record the information measured by the stabilization device. In addition, the controller is responsible of running the Flight Control Laws and conditioning the data information received and sent from and to the stabilization device. The mentioned Flight Control Laws are in charge of defining the flight control laws of the in-flight refuelling system taken into account all the functionalities of the refuelling system. Therefore, the in-flight refuelling system has an active control of the aerodynamic control forces and drag generated at the hose-end in order to stabilize the drogue and adapt it to the external perturbations.

The refuelling system further comprises a control unit with a processing unit in charge of processing the information from the stabilization device and is able to determine autonomously the aerodynamic loads needed at the hose-end or may be send this information to an aircraft control equipment of the tanker aircraft for determining the aerodynamic loads needed at the hose-end. This control unit can be installed as control means of the stabilization device or can be installed in the tanker aircraft.

The in-flight refuelling system also comprises power supplying means configured to supply power at least to the components of the stabilization device such as the control means and/or the control unit. The power supplying means may be batteries or rat located on the refuelling system. Furthermore, the communication between the control means of the stabilization device and any other component of the refuelling system is wireless.

In a third inventive aspect, the present invention provides a tanker aircraft comprising an in-flight refuelling system according to any one of the embodiments of the second inventive aspect.

In an embodiment, the tanker aircraft comprises a stabilization device according to any one of the embodiments of the first inventive aspect.

The in-flight refuelling system is arranged at the tanker aircraft so that the hose of this system is connected to the tanker aircraft at a hose-end opposite to the hose-end where the coupling with the drogue and the stabilization device are located. The in-flight refuelling system is intended to supply fuel from the tanker aircraft to a receiver aircraft by coupling the hose to a receiver probe of the receiver aircraft through the drogue of the in-flight refuelling system.

In an embodiment, the tanker aircraft comprises an aircraft control equipment connected to the in-flight refuelling system and its stabilization device. Specifically in a particular embodiment, the aircraft control equipment is configured to determine the control forces and aerodynamic drag needed at the hose-end, specifically on the stabilization device, based on the information at least from the control means located at the stabilization device. More particularly, the control forces and aerodynamic drag needed are determined according to data measurement from the IMU of the control means.

In a fourth inventive aspect, the invention provides a method for stabilization a hose-end of an in-flight refuelling system according to any one of embodiments of the second inventive aspect, the method comprising rotating at least one aerofoil of the stabilization device installed on the refuelling system.

Rotating the at least one aerofoil generates the control forces necessary at the hose-end to control or generate the aerodynamic drag independently or complementary.

In an embodiment, the method further comprises measuring an acceleration and/or angular rate of the hose-end by means of the at least one IMU located at the stabilization device such that the acceleration and/or angular rate measurements from the IMU are considered to the stabilization of the hose-end.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic side view of an in-flight refuelling system of a tanker aircraft approaching to a receiver aircraft according to an embodiment of the present invention.
- Figure 2: This figure shows a schematic upper view of the embodiment shown in Figure 1.
- Figure 3: This figure shows a schematic side view of a stabilization device installed in an in-flight refuelling system according to an embodiment of the present invention.
- Figure 4: This figure shows a schematic side view of a stabilization device installed in an in-flight refuelling system according to another embodiment of the present invention.
- Figure 5: This figure shows a schematic perspective view of a stabilization device according to an embodiment of the present invention.
- Figure 6: This figure shows a schematic front view of the stabilization device of figure 5.
- Figure 7: This figure shows schematic front view of a stabilization device according to another embodiment of the present invention.
- Figure 8: This figure shows a schematic side view of a stabilization device with control means according to an embodiment of the present invention.
- Figure 9: This figure shows a schematic side view of a stabilization device with control means according to another embodiment of the present invention.

### DETAILED DESCRIPTION OF THE INVENTION

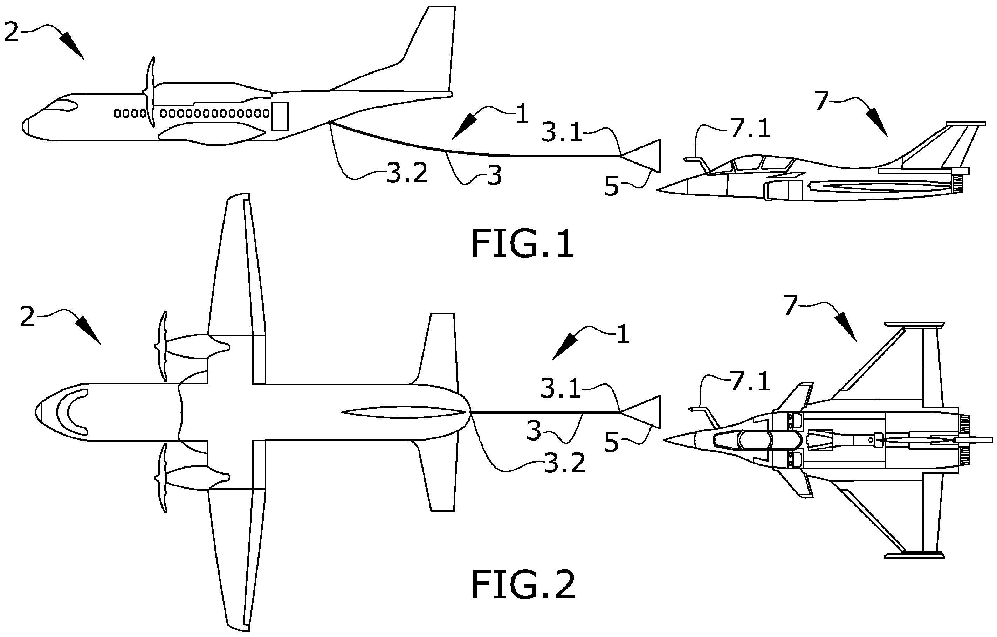

Figures 1 and 2 show a side and an upper view respectively of an in-flight refuelling system (1) in a refuelling operation between a tanker aircraft (2) and a receiver aircraft (7). In particular, these figures show when the hose (3) of the in-flight refuelling system (1) is in an extended position out of a tanker aircraft (2) and the receiver aircraft (7) is approaching to this hose (3) of the refuelling system (1). The in-flight refuelling system (1) comprises a hose (3) for driving fuel from a tanker aircraft (2) to a receiver aircraft (7) in a refuelling operation. Said hose (3) presents a drogue (5) and a coupling (4) (not shown) located at a hose-end (3.1)suitable for being coupled with a probe (11) of the receiver aircraft (7). The hose (3) also comprises another end (3.2) opposite to the already mentioned hose-end (3.1) where the hose (3) is fixed to the tanker aircraft (2). In a refuelling operation, the refuelling system (1) installed on the tanker aircraft (2) extends the hose (3) in order to couple the coupling (4) of the hose-end (3.1) to the probe (11) of the receiver aircraft (7) that is flying closer to the tanker aircraft (2) for allowing the approaching of the coupling (4) towards the probe (11). Once the coupling is achieved, then the fuel starts being driven through the hose (3) from the tanker aircraft (2) towards the receiver aircraft (7).

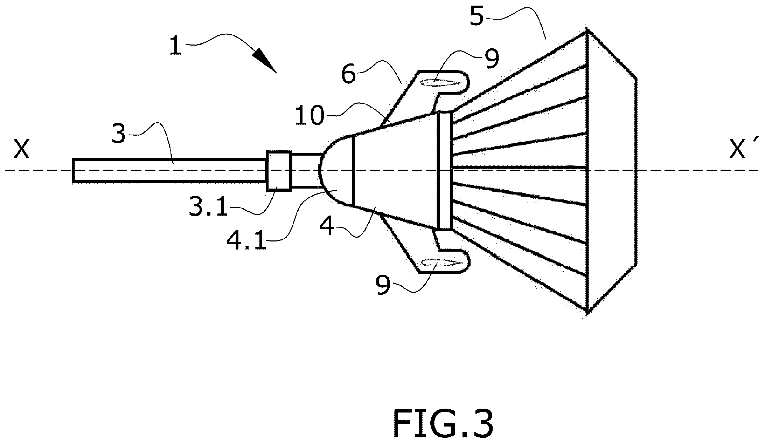

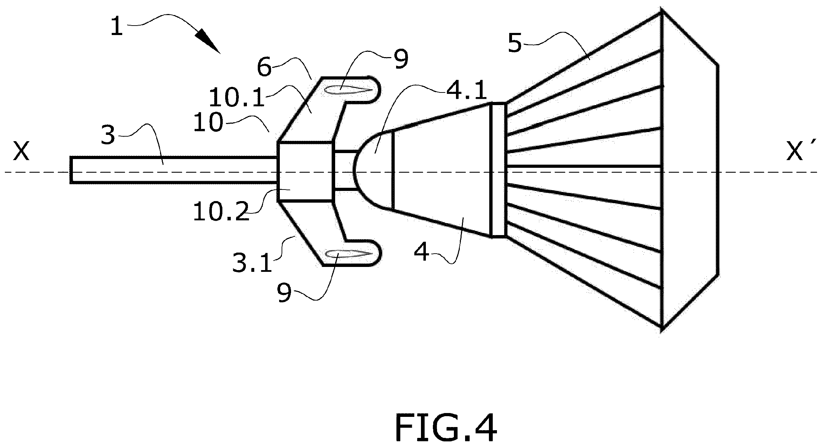

Figures 3 and 4 show a schematic side view of a portion of a hose (3) of an in-flight refuelling system (1). The hose (3) comprising a hose-end (3.1) suitable for coupling the in-flight refuelling system (1) to a probe (7.1) of the receiver aircraft (7) (as shown in figures 1 and 2) by monitoring and generating aerodynamic radial loads at the hose-end (3.1) in order to adapt the movement at the end of the hose (3) while approaching the probe (7.1) of the receiver aircraft (7). At the hose-end (3.1) there is a coupling (4) arranged along the longitudinal axis X-X' and comprising a drogue (5), such that the drogue (5) is arranged through the coupling (4) and is the component of the refuelling system (1) that generates aerodynamic drag and passively stabilizing the hose (3). In addition, the coupling (4) also comprises a ball joint (4.1) located opposite to the drogue (5) as it can be observed in these figures 3 and 4.

Figures 3 and 4 further show a stabilization device (6) comprising a plurality of aerofoils (9) and a support structure (10) for supporting the mentioned plurality of aerofoils (9). Figure 3 shows the stabilization device (6) located at the coupling (4) whilst figure 4 shows the stabilization device (6) located at an interface between the hose (3) and the coupling (4), specifically between the hose (3) and the ball joint (4.1) of the coupling (4).

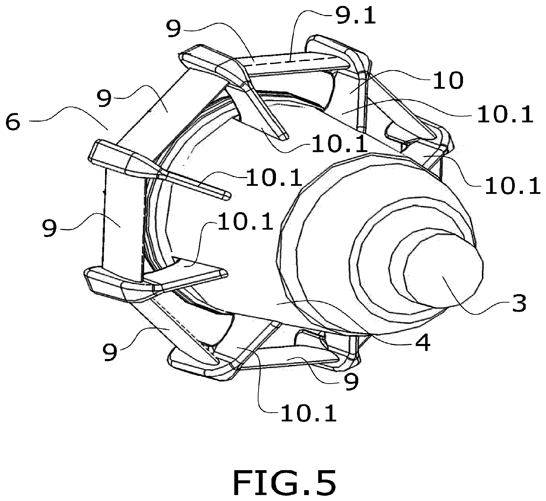

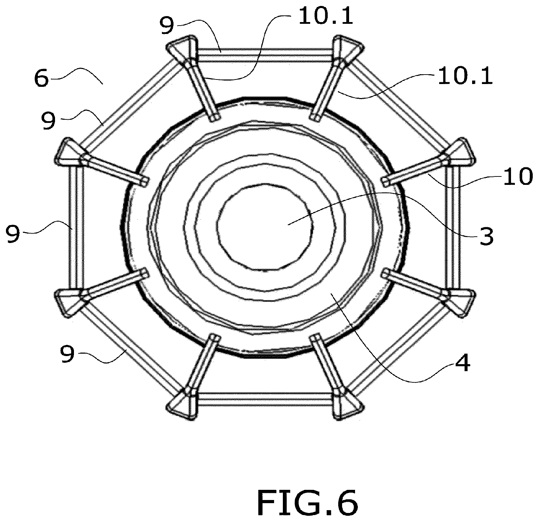

Figures 5 and 6 show different views of an embodiment of the stabilization device (6) arranged on the coupling (4) of a refuelling system (1) as shown in figure 3. According to this embodiment, the stabilization device (6) comprises eight aerofoils (9) distributed radially around a longitudinal axis X-X'. Each aerofoil (9) is supported at its respective ends by a support (10.1) of the support structure (10). Specifically, the aerofoils (9) are arranged consecutively one after the other around the coupling (4) and there is a common support (10.1) for every two consecutive aerofoils (9).

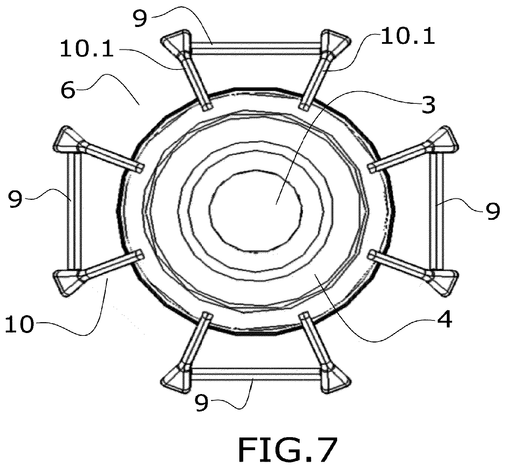

Figure 7 shows another embodiment wherein the stabilization device (6) comprises four aerofoils (9) distributed spaced apart between each other around the coupling (4). In this embodiment each aerofoil (9) is supported by two supports (10.1) of the support structure (10), so that there is a support (10.1) on each end of the aerofoil (9).

The aerofoils (9) according to any of the embodiments of figures 5 to 7 comprise a rotation axis (9.1) (shown in figures 5, 8 and 9) which is perpendicular to a radial direction to the longitudinal axis X-X'. Each aerofoil (9) is configured to rotate around the corresponding rotation axis (9.1) in a refuelling operation in order to generate control forces and aerodynamic drag at the hose-end (3.1) where the stabilization device (6) is installed.

According to any of the embodiment shown in figures 5 to 7, the supports (10.1) are arranged in a radial direction to the longitudinal axis X-X'. This means that each support (10.1) projects from the coupling (4) towards the aerofoils in a radial direction to the longitudinal axis X-X'.

As it can be observed in figure 5, the supports (10.1) have a bullet or cone shape at the front that is, from the side that faces to the hose (3).

According to the embodiment shown in figure 4, the support structure (10) comprises a casing (10.2) as an enclosure around the hose-end (3.1). In this embodiment, the supports (10.1) of the support structure (10) project from the casing (10.2) in a radial direction to the longitudinal axis X-X'.

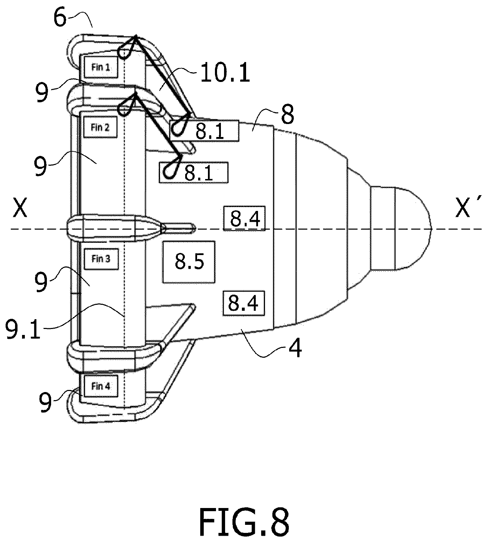

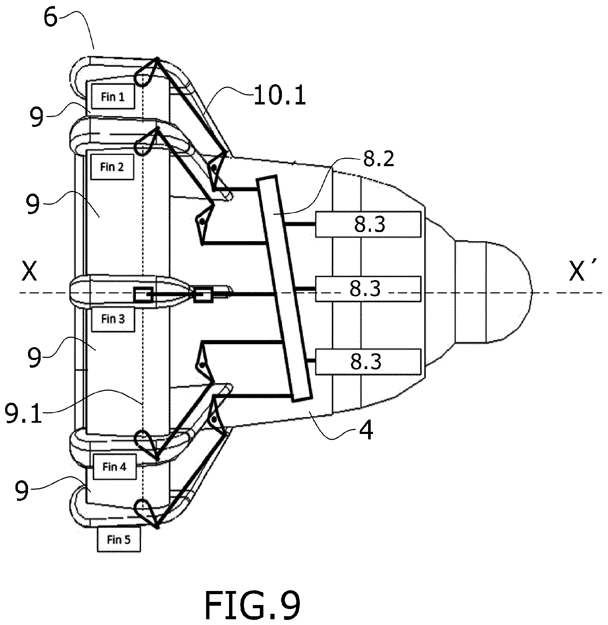

The stabilization device (6) shown in figures previously described above, further comprises control means (not shown) (8). These control means (8) are connected to the aerofoils (9) and independently control the rotation of each aerofoil (9) in a refuelling operation. Both figures 8 and 9 show an embodiment of the stabilization device (6) comprising control means (9).

These figures 8 and 9 shows an embodiment of a stabilization device (6) according to the ones described for figure 5. In addition, figure 8 also shows that the control means (8) comprise an actuator (8.1) for each aerofoil (9), although only two actuators (8.1) are shown in this figure 8. These actuators (8.1) are in charge of operating the rotation of the aerofoils (9) as needed.

Furthermore, the control means (8) comprise two inertial measurement units "IMU" (8.4) for measuring the acceleration and/or the angular rate of the stabilization device (6) in a refuelling operation, as it can be observed in figure 8. In addition, this figure 8 shown that the control means (8) also comprise a control unit (8.5) that controls the operation of the actuators (8.1) based on the measurement data from the IMU (8.4).

On the other hand, figure 9 shows that the control means (8) comprise a swashplate (8.2) that is mechanically linked with the plurality of aerofoils (9) and three linear actuators (8.3) in charge of operating the rotation of the aerofoils (9) through the swashplate (8.2) actuation in a refuelling operation. This embodiment of figure 9 also comprises an IMU (8.4) and a control unit (8.5) (not shown), so that the control unit (8.5) controls the operation of the linear actuators (8.3) based on the measurement data from the IMU (8.4). The control unit (8.5) determines the control forces and aerodynamic drag needed at the hose-end (3.1) in order to adapt the flight conditions of the in-flight refuelling system (1) in a refuelling operation.

Both figures 8 and 9 show the mechanically link between the control means (8) and the aerofoils (9). These mechanically links are distributed through the supports (10.1) of the support structure (10).

In an embodiment not shown in figures, the IMU (8.4) comprises an accelerometer for measuring the acceleration and a gyroscope for measuring the angular rate.

The control means (8) described above also comprise a processing unit in charge of determining in an operative mode the aerodynamic control forces and drag needed to counteract the undesirable movements at the hose-end (3.1) in order to facilitate the contact operation between the tanker aircraft (2) and the receiver aircraft (7).

In an embodiment not shown in figures, the in-flight refuelling system (1) also comprises power supplying means for supplying power to the stabilization device (6), specifically to the control means (8) and the control unit (8.5) of the stabilization device (6). The power supplying means may be batteries or rat.

According to any of the embodiment shown in figures, the communication between the control means (8) of the stabilization device (6) and any other component of the refuelling system (1) is wireless.

The present invention also provides a method for stabilization a hose-end (3.1) of an in-flight refuelling system (1). This method comprises rotating at least one aerofoil (9) of the stabilization device (6) when the stabilization device (6) is installed on the in-flight refuelling system (1).

This method according to an embodiment also comprises measuring the acceleration of the hose-end (3.1) and/or the angular rate of the hose-end (3.1) by means of at least one IMU (8.4) of the stabilization device (6), so that the control unit (8.5) of the stabilization device (6) determines based at least on the acceleration and/or angular rate data from the IMU (8.4) the control forces and aerodynamic drag needed at the hose-end (3.1) to stabilize the hose-end (3.1).

Once the control unit (8.5) received information at least from the IMU (8.4), the control unit (8.5) processes this information in a processing unit of the same. By means of processing this information, the control unit (8.5) is able to determine the aerodynamic radial loads needed at the hose-end (3.1). Therefore, according to this predetermined needed, the control unit (8.5) commands the actuators (8.1) or linear actuators (8.3) to actuate, according to step a), the rotation of at least one aerofoil (9) .

In an embodiment, the processing unit of the control unit (8.5) is connected to an aircraft control equipment, such as a controller located on the tanker aircraft (2), so that this control equipment determines the aerodynamic control forces and drag needed at the hose-end (3.1) instead of the processing unit and sends to the control unit (8.5) instructions to configure the rotation of each aerofoil (9) and to rotate these aerofoils (9).

## Claims

1. A stabilization device (6) for an in-flight refuelling system (1), the stabilization device (6) being arranged along a longitudinal axis X-X' and comprising:
- a plurality of aerofoils (9) arranged radially around the longitudinal axis X-X', each aerofoil (9) comprises a rotation axis (9.1) around which the aerofoil (9) is adapted for rotating;
- a support structure (10) adapted for supporting the plurality of aerofoils (9); and
- control means (8) connected with the plurality of aerofoils (9) and configured to independently control the rotation of each aerofoil (9) in a refuelling operation when the stabilization device (6) is arranged on the in-flight refuelling system (1).

2. The stabilization device (6) according to the previous claim, wherein the rotation axis (9.1) of each aerofoil (9) is perpendicular to a radial direction to longitudinal axis X-X'.

3. The stabilization device (6) according to any one of the previous claim, wherein each aerofoil (9) is supported at its respective ends by the support structure (10).

4. The stabilization device (6) according to any one of the previous claims, wherein the support structure (10) comprises a plurality of supports (10.1) arranged in a radial direction to the longitudinal axis X-X'.

5. The stabilization device (6) according to the previous claim, wherein the aerofoils (9) are arranged consecutively one after the other around the longitudinal axis X-X' so that there is a common support (10.1) for every two consecutive aerofoils (9).

6. The stabilization device (6) according to claim 4, wherein the aerofoils (9) are arranged spaced apart between each other around the longitudinal axis X-X' so that each aerofoils (9) is supported by two supports (10.1) of the support structure (10).

7. The stabilization device (6) according to any one of the previous claims, wherein the control means (8) comprise an actuator (8.1) for each aerofoil (9), and wherein each actuator (8.1) is configured to operate the rotation of the respective aerofoil (9) as needed.

8. The stabilization device (6) according to any one of claims 1 to 6, wherein the control means (8) comprise:
- a swashplate (8.2) mechanically connected to the plurality of aerofoils (9), and
- at least one linear actuator (8.3) configured to operate the rotation of at least one aerofoils (9) through the swashplate (8.2) actuation.

9. The stabilization device (6) according to any one of the previous claims, wherein the control means (8) comprise at least one inertial measurement unit "IMU" (8.4) configured to measure an acceleration and/or angular rate of the stabilization device (6).

10. The stabilization device (6) according to any one of claims 7 to 8 and claim 9, wherein the control means (8) further comprise a control unit (8.5) configured for controlling the operation of the actuators (8.1) or the at least one linear actuator (8.3) according to measurement data from the IMU (8.4).

11. In-flight refuelling system (1) for a tanker aircraft (2), the system (1) comprising:
- a hose (3) suitable for driving fuel inside,
- a coupling (4) arranged at a hose-end (3.1) of the hose (3) along a longitudinal axis X-X' and comprising a drogue (5), the coupling (4) being configured to be coupled to a probe (7.1) of a receiver aircraft (7) in a refuelling operation, and
- a stabilization device (6) according to any one of the previous claims, the stabilization device (6) being configured to actively stabilize the hose-end (3.1) in the refuelling operation;
wherein the stabilization device (6) is configured so that controlling the rotation of at least one of the plurality of aerofoils (9) by the control means (8) stabilize the hose-end (3.1) in a refuelling operation.

12. The system (1) according to the previous claim, wherein the stabilization device (6) is located at the coupling (4) or at the drogue (5) or at an interface between the hose (3) and the coupling (4).

13. Tanker aircraft (2) comprising an in-flight refuelling system (1) according to any one of claims 11 to 12.

14. A method for stabilization a hose-end (3.1) of an in-flight refuelling system (1) according to any one of claims 11 to 12, the method comprising rotating at least one aerofoil (9) of the stabilization device (6) installed on the refuelling system (1).

15. The method according to the previous claim, further comprising measuring an acceleration and/or angular rate of the hose-end (3.1) by means of the at least one IMU (8.4) located at the stabilization device (6) such that the acceleration and/or angular rate measurements from the IMU (8.4) are considered to the stabilization of the hose-end (3.1).
